# NEUE EUROPÄISCHE PATENTSCHRIFT

(11) **EP 1 715 966 B2**
(45) Veröffentlichungstag und Bekanntmachung des Hinweises auf die Entscheidung über den Einspruch: **29.06.2016**
(45) Hinweis auf die Patenterteilung: 13.05.2009
(21) Anmeldenummer: 05701187.6
(22) Anmeldetag: 26.01.2005
(51) Int. Cl.: B21B 31/00, B23Q 1/00

(54) **PLATTFORM FÜR INDUSTRIEANLAGEN, INSBESONDERE FÜR HOCHDRUCKENTZUNDERER, NOTSCHEREN UND PENDELSCHEREN IN WALZSTRASSEN, O. DGL.**
PLATFORM FOR INDUSTRIAL INSTALLATIONS, PARTICULARLY FOR HIGH-PRESSURE DESCALERS, EMERGENCY SHEARS AND PENDULUM SHEARS IN ROLLING TRAINS OR THE LIKE
PLATE-FORME POUR INSTALLATIONS INDUSTRIELLES, NOTAMMENT POUR DECALAMINEURS HAUTE PRESSION, CISAILLES DE SECOURS ET CISAILLES PENDULAIRES OU SIMILAIRES

(30) Priorität: 20.02.2004 DE 102004008491
(43) Veröffentlichungstag der Anmeldung: 02.11.2006
(73) Patentinhaber: SMS group GmbH, 40237 Düsseldorf (DE)
(72) Erfinder: GINSBERG, Klaus, 57072 Siegen (DE); MÜLLER, Günter, 57489 Drolshagen (DE); BÄUMER, Klaus, 57223 Kreuztal (DE); HEINFLING, Volker, 57271 Hilchenbach (DE)
(74) Vertreter: Klüppel, Walter
(86) Internationale Anmeldenummer: PCT/EP2005/000742
(87) Internationale Veröffentlichungsnummer: WO 2005/089971

(56) Entgegenhaltungen:
- EP-A- 1 332 806
- EP-B1- 1 100 634
- WO-A1-02/24359
- DE-A1- 10 028 305
- DE-U1- 9 408 440
- US-A- 2 722 392
- PATENT ABSTRACTS OF JAPAN Bd. 004, Nr. 002 (C-069), 9. Januar 1980 (1980-01-09) & JP 54 137464 A (HITACHI LTD), 25. Oktober 1979 (1979-10-25)

## Beschreibung

Die Erfindung betrifft eine Vorrichtung mit einer Maschine und mit einer Plattform für Industrieanlagen, insbesondere für Hochdruckentzunderer, Notscheren und Pendelscheren in Walzstraßen, o. dgl. mit ggf. gebündelten Zufuhr-, Abfuhr- und /oder Verteilerleitungen, die in Betriebslage mit den ortsfesten Leitungen der jeweiligen Maschine verbindbar sind, bei der eine Anordnung der polygonalen Plattform in unmittelbarer Nähe, mit einem eingestellten Abstand, Seitenlage und Höhenlage der anzuschließenden Maschine vorgenommen ist. Eine Vorrichtung gemäß dem Oberbegriff von Anspruch 1 ist z.B. aus JP-A 54137464 bekannt.

Die Versorgung von Maschinen mit hydraulischen Flüssigkeiten, Schmier- und Kühlmittel, elektrischer Energie und Steuersignalen erfolgt in der Regel über Rohre bzw. Leitungen über das Fundament oder in Fundamentgräben. Dabei werden bspw. Ventilstände auf dem Fundament, auf separaten Konsolen oder im Keller dezentral angeordnet. Diese Gestaltung führt zu einer großen Anzahl von Rohrleitungen bis zur Maschine, wofür eine große Anzahl Schnittstellen Fundament / Maschine erforderlich sind. Darüber hinaus sind diese Schnittstellen individuell festgelegt, angeordnet und in der Regel nicht übertragbar von Anlage zu Anlage. Bei Änderungen im Bereich der Maschine ergibt sich dadurch eine anlagenspezifische Leitungsführung zu einzelnen Betriebsorten. Etwa frei verlegte Rohrleitungen erschweren den Zugang zu den Betriebsorten. Außerdem sind frei verlegte Rohrleitungen unübersichtlich verlegt und erschweren auch den Zutritt der jeweiligen Örtlichkeit zwischen den Rohrleitungen. Die Konsolen von Motoren zum Antreiben von Rollen, Walzen o. dgl. und die Verteilerblöcke zur Hochdruck-Entzunderung sind einzeln auf dem Fundament ausgerichtet und verankert. Die Verrohrung muss zwangsläufig um derartige Konsolen herumgeführt werden.

Die Medienverrohrung ist in Einzelfällen in sog. Fundamentkanälen angeordnet. In die Fundamentkanäle kann Schmutzwasser gelangen und verursacht eine Ansammlung von Schmutz und Schlamm, die auf Dauer zu einer dicken, festen Schicht aufwächst.

Nachträglich auf einer Baustelle anzubringende Gerätschaften, wie bspw. Ständer für Messgeräte, andere Halterungen u. dgl. können nuruntergroßem Aufwand zwischen den Rohren befestigt werden oder müssen wegen Platzmangel in weitem Abstand angebracht werden.

Aus der EP 1 100 634 B1 ist eine Anordnung von Zufuhr-, Abfuhr- und Verteilerleitungen eines Verteilernetzes für flüssige Betriebsmedien, wie bspw. Schmier- oder Kühlmittel, bekannt, sowie für hydraulische Druckmedien für Stellorgane oder Antriebe an mit Ständern ausgebildeten Walzgerüsten. Dabei werden an das Gerüst montierbare Module verwendet und Rohrleitungsgruppen zusammengefasst. Diese Gestaltung ist zwar für ein Walzgerüst vorteilhaft, jedoch kann das Prinzip nicht ohne weiteres auch auf andere Maschinen angewendet werden.

Der Erfindung liegt die Aufgabe zugrunde, eine an den jeweiligen Ort anpassbare zentrale Vorrichtung für den Anschluss von Medien- und Energieleitungen zu schaffen, die überschaubar und leicht kontrollierbar sind.

Die gestellte Aufgabe wird erfindungsgemäß dadurch gelöst, dass verbindbare Stellorgane, Geräte, Antriebe und Antriebskonsolen, Verteilerblöcke, Ventilstände, Steuerelemente u. dgl. auf einer horizontalen, polygonalen Plattform-Grundfläche entsprechend ihren Funktionen gegenüber der Maschine verteilt angeordnet sind.

Die Vorteile dieser Gestaltung sind: Der Aufwand der Baustellen-Verrohrung wird reduziert. Die Zugänglichkeit zu den Rohranschlussstellen, Stellorganen und Antrieben wird verbessert. Infolge der Anordnungen von Steuerungsorganen an zentraler Stelle werden Service-Arbeiten und Kontrollmöglichkeiten begünstigt. Die Hydraulik-Verrohrung im Keller der Anlagen wird erheblich reduziert. Die Plattform bietet mehr Fläche für die zentrale Anordnung von Zusatzgerätschaften. Zusätzlich liefern die definierten und standardisierten Schnittstellen der Rohranschlüsse eine bessere Übersicht und eindeutige Verbraucherzuordnungen.

Eine vorteilhafte Gestaltung sieht vor, dass eine Rahmenkonstruktion mit Stellfüßen und Fundament-Befestigungen vorgesehen ist, in die die Medienleitungen eingebunden sind.

Andere Merkmale ergeben sich daraus, dass die Rohrleitungen für Medien, wie bspw. Hydraulikflüssigkeit, Wasser, Hochdruckwasser, Luft, Fett und Elektroleitungen vorgesehen sind, deren Enden die Plattform-Grundfläche um einen Anschluss-Abschnitt überragen. Die Anschlüsse liegen dadurch etwas außerhalb und sind gut zugänglich.

Der Aufbau der Plattform kann noch dadurch verbessert werden, dass Träger für die Aufnahme von Konsolen, einem Verteilerblock, Ventilständen u. dgl. vorgesehen sind.

Dabei ist vorgesehen, dass der jeweilige Anschluss-Abschnitt als Flansch-, Schweiß- oder Kupplungsverbindung ausgeführt ist.

Weiterhin wird vorgeschlagen, dass innerhalb der Plattform-Grundfläche Gitterroste für die Ableitung von Flüssigkeiten oder Abdeckbleche für die Begehbarkeit angeordnet sind. Falls nötig, kann daher vermieden werden, dass Spritzwasser durch die Plattform fließen kann.

Ein weiterer Vorteil für die Montage der Plattform besteht darin, dass diese in montiertem Zustand als Einheit transportierbar ist.

In der Zeichnung sind Ausführungsbeispiele der Erfindung dargestellt, die nachstehend näher erläutert werden.

Es zeigen:
- Fig. 1: einen Grundriss der Plattform bei Kombination mit einem Hoch- druck-Entzunderer und
- Fig. 2: die Seitenansicht zu Fig. 1.

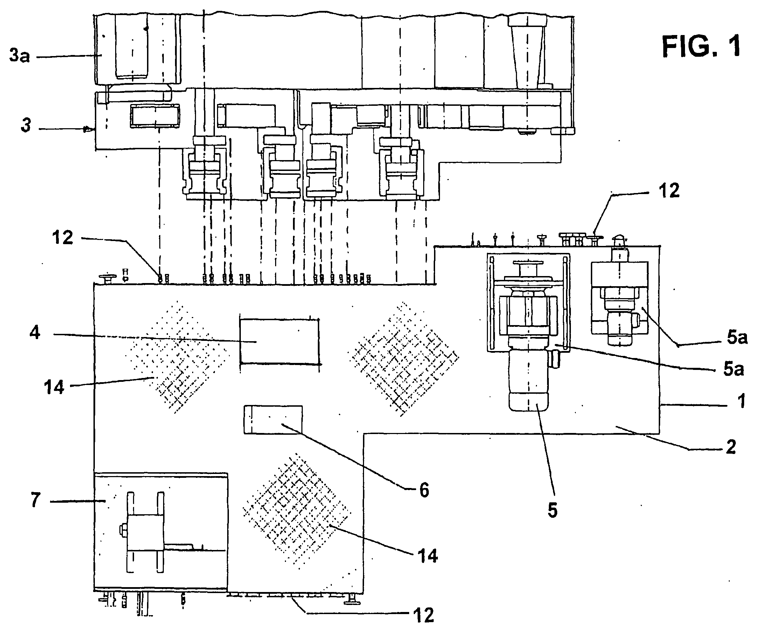

Die in Fig. 1 dargestellte Plattform 1 für Industrieanlagen, wie bspw. Hochdruckentzunderer 3a oder allgemein Maschinen 3, wie bspw. Notscheren oder Pendelscheren in Walzstraßen, werden mit ggfs. gebündelten Zufuhr-, Abfuhr und / oder Verteilerleitungen 11 in Betriebslage mit den ortsfesten Leitungen der jeweiligen Maschine 3 verbunden. Die Anordnung der Plattform 1 erfolgt in unmittelbarer Nähe mit einem für die einzelnen Aggregate eingestellten Abstand, einer zugeordneten Seitenlage und einer passenden Höhenlage, die passend für die anzuschließende Maschine 3 sind. Anzuschließende Stellorgane 4 oder Geräte 4, Antriebe 5 mit Antriebskonsolen 5a, Verteilerblöcke 6, Ventilstände 7 oder Steuerelemente u. dgl. werden auf einer horizontalen, polygonalen Plattform-Grundfläche 2 entsprechend ihren Funktionen gegenüber der jeweiligen Maschine 3 verteilt angeordnet.

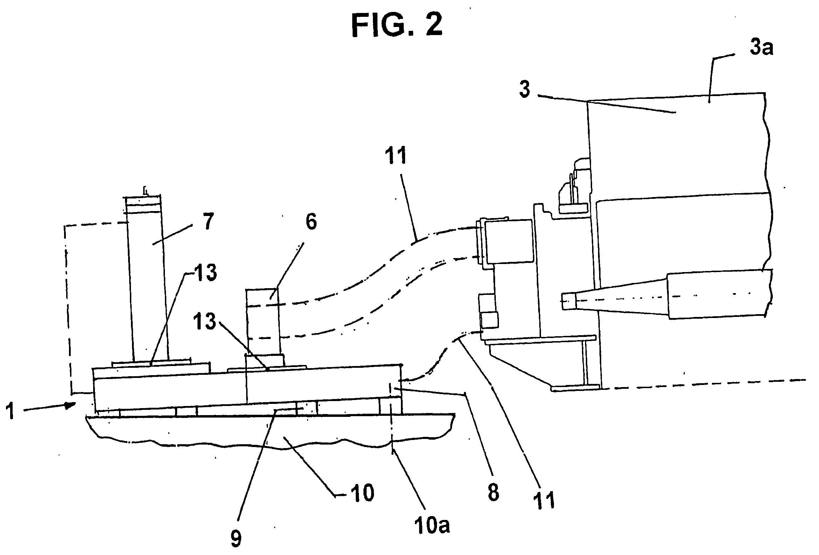

Fig. 2 zeigt eine Rahmenkonstruktion 8 mit Stellfüßen 9 und Fundament-Befestigun-gen 10a im Fundament 10, in die die Medienleitungen (11) eingebunden sind. Die Rohrleitungen 11 sind für Medien wie bspw. Hydraulikflüssigkeit, Wasser, Hochdruckwasser, Luft, Druckluft, Fett und auch als Elektroleitungen vorgesehen, deren Ende die Plattform-Grundfläche 2 um einen Anschluss-Abschnitt 12 überragen.

Für die Aufnahme von Konsolen 5a, einem Verteilerblock 6 und einem Ventilstand 7 sind jeweils Träger 13 befestigt.

Die mit dem Anschluss-Abschnitt 12 vorstehenden Enden sind jeweils als Flansch-, Schweiß- oder Kupplungsverbindung ausgeführt (Fig. 1).

Innerhalb der Plattform- Grundfläche 2 sind mehrere Gitterroste 14 für die Ableitung von Flüssigkeiten vorgesehen, die auch eventuell mit Abdeckblechen zusammen , für eine sichere Begehbarkeit sorgen.

Die in den Fig. 1 und 2 dargestellte Plattform 1 kann mit allen Bauteilen in montiertem Zustand als Einheit ( per Kran und Lkw) auf die Baustelle transportiert werden.

### Bezugszeichenliste

- 1: Plattform
- 2: Plattform-Grundfläche
- 3: Maschine
- 3a: Hochdruck-Entzunderer
- 4: Stellorgan, Gerät
- 5: Antrieb
- 5a: Antriebskonsole
- 6: Verteilerblock
- 7: Ventilstand
- 8: Rahmenkonstruktion
- 9: Stellfuß
- 10: Fundament
- 10a: Fundament-Befestigung
- 11: Zufuhr-, Abfuhr- und / oder Verteilerleitung
- 12: Anschluss-Abschnitt
- 13: Träger
- 14: Gitterrost

## Patentansprüche

1. Vorrichtung mit einer Maschine und mit einer Plattform (1) für Industrieanlagen, insbesondere für Hochdruckentzunderer (3a), Notscheren und Pendelscheren in Walzstraßen, o. dgl. mit ggf. gebündelten Zufuhr-, Abfuhr- und /oder Verteilerleitungen (11), die in Betriebslage mit den ortsfesten Leitungen der jeweiligen Maschine (3) verbindbar sind, bei der eine Anordnung der polygonalen Plattform in unmittelbarer Nähe, mit einem eingestellten Abstand, Seitenlage und Höhenlage der anzuschließenden Maschine (3) vorgenommen ist,
**dadurch gekennzeichnet,**
**dass** verbindbare Stellorgane (4), Geräte (4), Antriebe (5) und Antriebskonsolen (5a), Verteilerblöcke (6), Ventilstände (7), Steuerelemente u. dgl. auf einer horizontalen, polygonalen Plattform-Grundfläche (2) entsprechend ihren Funktionen gegenüber der Maschine (3) verteilt angeordnet sind.

2. Vorrichtung nach Anspruch 1, **dadurch gekennzeichnet, dass** eine Rahmenkonstruktion (8) mit Stellfüßen (9) und Fundament-Befestigungen (10a) vorgesehen ist, in die die Medienleitungen eingebunden sind.

3. Vorrichtung nach einem der Ansprüche 1 oder 2 **dadurch gekennzeichnet, dass** die Rohrleitungen (11) für Medien wie bspw. Hydraulikflüssigkeit, Wasser, Hochdruckwasser, Luft, Fett und Elektroleitungen vorgesehen sind, deren Enden die Plattform-Grundfläche (2) um einen Anschluss-Abschnitt (12) überragen.

4. Vorrichtung nach einem der Ansprüche 1 bis 3, **dadurch gekennzeichnet, dass** Träger (13) für die Aufnahme von Konsolen (5a), Verteilerblock (6), Ventilständen (7), u. dgl. vorgesehen sind.

5. Vorrichtung nach einem der Ansprüche 1 bis 4, **dadurch gekennzeichnet, dass** der jeweilige Anschluss-Abschnitt (12) als Flansch-, Schweiß- oder Kupplungsverbindung ausgeführt ist.

6. Vorrichtung nach einem der Ansprüche 1 bis 5, **dadurch gekennzeichnet, dass** innerhalb der Plattform-Grundfläche (2) Gitterroste (14) für die Ableitung von Flüssigkeiten oder Abdeckbleche für die Begehbarkeit angeordnet sind.

7. Vorrichtung nach einem der Ansprüche 1 bis 6, **dadurch gekennzeichnet, dass** die Plattform (1) in montiertem Zustand als Einheit transportierbar ist.

## Claims

1. Device with a machine and a platform (1) for industrial plants, particularly for high-pressure descalers (3a), emergency cutters and pendulum shears in rolling trains or the like, with optionally bundled feed, discharge and/or distributor lines (11) which are connectible in operating position with the stationary lines of the respective machine (3), in which an arrangement of the polygonal platform is undertaken in the immediate vicinity, with a set spacing, lateral position and height position of the machine (3) to be connected, **characterised in that** the connectible setting elements (4), apparatus (4), drives (5) and drive control panels (5a), distributor blocks (6), valve stations (7), control elements and the like are arranged in distribution on a horizontal, polygonal platform area (2) in correspondence with the functions thereof relative to the machine (3).

2. Device according to claim 1, **characterised in that** a frame construction (8) with adjusting feet (9) and foundation fastenings (10a) is provided, in which the media lines are incorporated.

3. Device according to one of claims 1 and 2, **characterised in that** the tube ducts (11) for media such as, for example, hydraulic fluid, water, high-pressure water, air, grease and electrical lines are provided, the ends of which project beyond the platform area (2) by a connecting section (12).

4. Device according to any one of claims 1 to 3, **characterised in that** supports (13) for mounting of control panels (5a), distributor block (6), valve stations (7) and the like are provided.

5. Device according to any one of claims 1 to 4, **characterised in that** the respective connecting section (12) is constructed as a flanged, welded or coupling connection.

6. Device according to any one of claims 1 to 5, **characterised in that** grills (14) for conducting away liquids or cover plates to enable walking are arranged within the platform area (2).

7. Device according to any one of claims 1 to 6, **characterised in that** the platform (1) in mounted state this is transportable as a unit.

## Revendications

1. Dispositif comprenant une machine et une plate-forme (1) pour des installations industrielles, en particulier pour décalamineurs haute pression (3a), des cisailles de secours et des cisailles pendulaires dans des trains de laminage ou similaires, comprenant des conduites éventuellement en faisceau pour l'amenée, l'évacuation et/ou la répartition (11), lesquelles peuvent être reliées en situation de fonctionnement aux conduites stationnaires de la machine respective (3), dans lequel il est effectué un agencement de la plate-forme polygonale au voisinage immédiat de la machine qu'il s'agit de raccorder (3), avec une distance, une position latérale et une position en hauteur établie de celle-ci,
**caractérisé en ce que**
des organes de positionnement (4), des appareils (4), des entraînements (5) et des consoles d'entraînement (5a), des blocs de répartition (6), des porte-valves (7), des éléments de commandes et similaires à raccorder, sont agencé(e)s de façon répartie sur une surface de base horizontale polygonale de la plate-forme de façon correspondante à leurs fonctions vis-à-vis de la machine (3).

2. Dispositif selon la revendication 1,
**caractérisé en ce qu'**il est prévu une construction formant cadre (8) avec des pieds de support (9) et des fixations pour fondations (10a), dans lesquel(le)s sont intégrées les conduites à fluide.

3. Dispositif selon l'une des revendications 1 ou 2,
**caractérisé en ce qu'**il est prévu des conduites tubulaires (11) pour des fluides, comme par exemple un liquide hydraulique, de l'eau, de l'eau sous haute pression, de l'air, des graisses, ainsi que des lignes électriques, dont les extrémités dépassent depuis la surface de base (2) de la plate-forme en formant un tronçon de raccordement (12).

4. Dispositif selon l'une des revendications 1 à 3,
**caractérisé en ce qu'**il est prévu des supports (13) pour la réception de consoles (5a), de blocs de répartition (6), de porte-valves (7), ou similaires.

5. Dispositif selon l'une des revendications 1 à 4,
**caractérisé en ce que** le tronçon de raccordement respectif (12) est réalisé sous forme de jonction à bride, de jonction à souder, ou de jonction à accouplement.

6. Dispositif selon l'une des revendications 1 à 5,
**caractérisé en ce que** des grilles (14) sont agencées à l'intérieur de la surface de base (2) de la plate-forme pour l'évacuation de liquides, ou des tôles de recouvrement permettant l'accès.

7. Dispositif selon l'une des revendications 1 à 6,
**caractérisé en ce que** la plateforme (1) est transportable sous forme d'une unité dans la situation montée.
